# EUROPEAN PATENT APPLICATION

(11) **EP 3 761 585 A1**
(43) Date of publication of application: **06.01.2021**
(21) Application number: 19770898.5
(22) Date of filing: 19.02.2019
(51) Int. Cl.: H04L 27/26, H04L 5/14

(54) **DATA TRANSMISSION METHOD AND APPARATUS**

(30) Priority: 20.03.2018 CN 201810231109
(71) Applicant: HUAWEI TECHNOLOGIES CO., LTD., Shenzhen, Guangdong 518129 (CN)
(72) Inventor: GAN, Ming, Shenzhen, Guangdong 518129 (CN); CHEN, Teyan, Shenzhen, Guangdong 518129 (CN); LIANG, Dandan, Shenzhen, Guangdong 518129 (CN); ZUO, Xin, Shenzhen, Guangdong 518129 (CN); WU, Tao, Shenzhen, Guangdong 518129 (CN)
(74) Representative: Epping - Hermann - Fischer
(86) International application number: PCT/CN2019/075496
(87) International publication number: WO 2019/179273

(57) **Abstract**

Embodiments of this application provide a data transmission method and apparatus and relate to the field of communications technologies, to resolve a problem in full-duplex communication that a residual self-interference signal pollutes a received signal and causes a comparatively low signal-to-noise ratio of the received signal. The method is applied to a device that supports full-duplex communication, and the method includes: sending a first data frame and receiving a second data frame on a same time-frequency resource, where the first data frame and the second data frame each include a plurality of OFDM symbols, and a pilot sequence used for the OFDM symbols in the first data frame and a pilot sequence used for the OFDM symbols in the second data frame are orthogonal to each other.

## Description

This application claims priority to Chinese Patent Application No. 201810231109.4, filed with the Chinese Patent Office on March 20, 2018 and entitled "DATA TRANSMISSION METHOD AND APPARATUS", which is incorporated herein by reference in its entirety.

### TECHNICAL FIELD

This application relates to the field of communications technologies, and in particular, to a data transmission method and apparatus.

### BACKGROUND

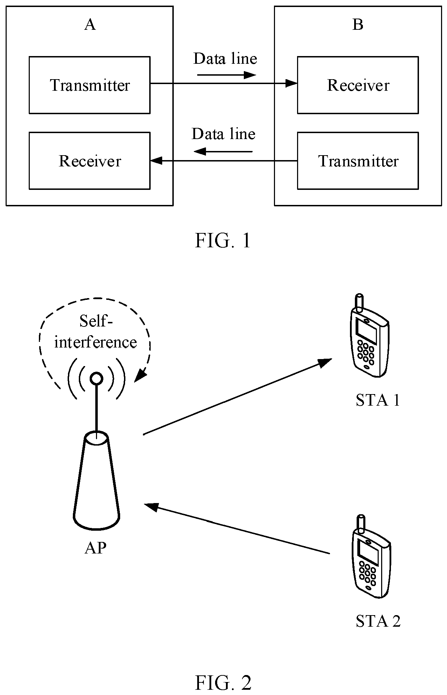

In a full duplex (full duplex, FD) technology, a communications node sends and receives data on a same time resource and a same frequency resource. For example, as shown in FIG. 1, communications nodes A and B each include a transmitter and a receiver. The transmitter in A is connected to the receiver in B through a data line, and the receiver in A is also connected to the transmitter in B through a data line. Data sent and received between A and B may be simultaneously transmitted on a same radio channel. This can improve utilization efficiency of a radio spectrum and resolve a problem of scarcity of radio spectrum resources. However, in full duplex, because data is sent and received by using a same time-frequency resource, a local transmitter generates a self-interference signal to a local receiver, and consequently affects reception of a signal of another communications node by the local receiver, that is, the signal received by the receiver is polluted by the self-interference signal.

Currently, in full-duplex transmission, three types of technologies such as antenna interference cancellation, radio frequency interference cancellation, and digital interference cancellation may be usually used to cancel a self-interference signal. Antenna interference suppression is: suppressing interference of a transmitter signal to a receiver signal by increasing isolation between a transmit antenna and a receive antenna. A radio frequency interference cancellation method is: modulating a radio frequency signal of a local transmitter to an amplitude the same as that of a receiver and a phase opposite to that of the receiver, and then combining the radio frequency signal with a receiver signal, so as to cancel self-interference. A digital baseband interference cancellation method is: canceling a transmitter signal in a receiver signal by using a transmitter baseband signal and a data signal processing technology.

However, a residual self-interference signal still exists after processing is performed by using the foregoing self-interference cancellation technology. The residual self-interference signal still causes some pollution to a signal received by the receiver, and consequently, a signal-to-noise ratio of the received signal is comparatively low.

### SUMMARY

Embodiments of this application provide a data transmission method and apparatus, to resolve a problem in a conventional full-duplex communications technology that a residual self-interference signal pollutes a received signal and causes a comparatively low signal-to-noise ratio of the received signal.

To achieve the foregoing objective, the following technical solutions are used in the embodiments of this application.

According to a first aspect, a data transmission method is provided. The method is applied to a device that supports full-duplex communication, and the method includes: sending a first data frame and receiving a second data frame on a same time-frequency resource, where the first data frame and the second data frame each include a plurality of OFDM symbols, that is, OFDM modulation is used for both the first data frame and the second data frame, and a pilot sequence used for the OFDM symbols in the first data frame and a pilot sequence used for the OFDM symbols in the second data frame are orthogonal to each other. In the foregoing technical solution, an inner product of the two mutually orthogonal pilot sequences is zero, so that impact, of a self-interference signal generated by the first data frame, on a received signal corresponding to the second data frame can be reduced, thereby increasing a signal-to-noise ratio of the received signal.

In a possible implementation of the first aspect, a length of the pilot sequence is 2, the mutually orthogonal pilot sequences include a first pilot sequence and a second pilot sequence, the first pilot sequence is [1 1], and the second pilot sequence is either of the following: [1 -1] and [-1 1]. In the foregoing possible implementation, impact, of a self-interference signal generated by the first data frame, on a received signal corresponding to the second data frame can be reduced when the length of the pilot sequence is 2, thereby increasing a signal-to-noise ratio of the received signal corresponding to the second data frame.

In a possible implementation of the first aspect, a length of the pilot sequence is 4, the mutually orthogonal pilot sequences include a first pilot sequence and a second pilot sequence, the first pilot sequence is [1 1 1 -1], and the second pilot sequence is any one of the following: [1 1 -1 1], [1 -1 1 1], [1 -1 -1 -1], [-1 1 1 1], [-11-1-1], and [-1 -1 1 -1]. In the foregoing possible implementation, impact, of a self-interference signal generated by the first data frame, on a received signal corresponding to the second data frame can be reduced when the length of the pilot sequence is 4, thereby increasing a signal-to-noise ratio of the received signal corresponding to the second data frame.

In a possible implementation of the first aspect, a length of the pilot sequence is 6, the mutually orthogonal pilot sequences include a first pilot sequence and a second pilot sequence, the first pilot sequence is [1 1 1 -1 -1 1], and the second pilot sequence is any one of those shown in Table 1 in the specification. In the foregoing possible implementation, impact, of a self-interference signal generated by the first data frame, on a received signal corresponding to the second data frame can be reduced when the length of the pilot sequence is 6, thereby increasing a signal-to-noise ratio of the received signal corresponding to the second data frame.

In a possible implementation of the first aspect, a length of the pilot sequence is 8, the mutually orthogonal pilot sequences include a first pilot sequence and a second pilot sequence, the first pilot sequence is [1 1 1 -1 -1 1 1 1], and the second pilot sequence is any one of those shown in Table 2 in the specification. In the foregoing possible implementation, impact, of a self-interference signal generated by the first data frame, on a received signal corresponding to the second data frame can be reduced when the length of the pilot sequence is 6, thereby increasing a signal-to-noise ratio of the received signal corresponding to the second data frame.

In a possible implementation of the first aspect, a length of the pilot sequence is 16, the mutually orthogonal pilot sequences include a first pilot sequence and a second pilot sequence, the first pilot sequence is [1 1 1 -1 -1 1 1 1 1 1 1 -1 -1 1 1 1], and the second pilot sequence is any one of those shown in Table 3 in the specification. In the foregoing possible implementation, impact, of a self-interference signal generated by the first data frame, on a received signal corresponding to the second data frame can be reduced when the length of the pilot sequence is 16, thereby increasing a signal-to-noise ratio of the received signal corresponding to the second data frame.

In a possible implementation of the first aspect, a length of the pilot sequence is 24, the mutually orthogonal pilot sequences include a first pilot sequence and a second pilot sequence, the first pilot sequence is [1 1 1 -1 -1 1 1 1 1 1 1 -1 -1 1 1 1 1 1 1-1 -1 1 1 1], and the second pilot sequence is any one of those shown in Table 4 in the specification. In the foregoing possible implementation, impact, of a self-interference signal generated by the first data frame, on a received signal corresponding to the second data frame can be reduced when the length of the pilot sequence is 24, thereby increasing a signal-to-noise ratio of the received signal corresponding to the second data frame.

In a possible implementation of the first aspect, a length of the pilot sequence is 32, the mutually orthogonal pilot sequences include a first pilot sequence and a second pilot sequence, the first pilot sequence is [1 1 1 -1 -1 1 1 1 1 1 1 -1 -1 1 1 1 1 1 1 -1 -1 1 1 1 1 1 1 -1 -1 1 1 1], and the second pilot sequence is any one of those shown in Table 5 in the specification. In the foregoing possible implementation, impact, of a self-interference signal generated by the first data frame, on a received signal corresponding to the second data frame can be reduced when the length of the pilot sequence is 32, thereby increasing a signal-to-noise ratio of the received signal corresponding to the second data frame.

In a possible implementation of the first aspect, the first data frame is aligned with the second data frame, to be specific, a start location and an end location of the first data frame are aligned with those of the second data frame.

In a possible implementation of the first aspect, cyclic prefixes of two OFDM symbols at a same location in the first data frame and the second data frame have a same length.

In a possible implementation of the first aspect, two OFDM symbols at a same location in the first data frame and the second data frame have a same subcarrier spacing.

In a possible implementation of the first aspect, two OFDM symbols at a same location in the first data frame and the second data frame have a same start time.

In the foregoing several possible implementations, a signal corresponding to the first data frame and a signal corresponding to the second data frame can have a same phase, that is, it is ensured that phases of a self-interference signal and a received signal are the same. This can improve effectiveness of cancellation of the self-interference signal, thereby increasing a signal-to-noise ratio of the received signal.

According to a second aspect, a data transmission method is provided. The method is applied to a device that supports full-duplex communication, and the method includes: sending a first data frame and receiving a second data frame on a same time-frequency resource, where the first data frame and the second data frame each include a plurality of OFDM symbols, and the first data frame is aligned with the second data frame, to be specific, a start location and an end location of the first data frame are aligned with those of the second data frame. In the foregoing technical solution, a signal corresponding to the first data frame and a signal corresponding to the second data frame can have a same phase, that is, it is ensured that phases of a self-interference signal and a received signal are the same. This can improve effectiveness of cancellation of the self-interference signal, thereby increasing a signal-to-noise ratio of the received signal.

In a possible implementation of the first aspect, cyclic prefixes of two OFDM symbols at a same location in the first data frame and the second data frame have a same length.

In a possible implementation of the first aspect, two OFDM symbols at a same location in the first data frame and the second data frame have a same subcarrier spacing.

In a possible implementation of the first aspect, two OFDM symbols at a same location in the first data frame and the second data frame have a same start time.

According to a third aspect, a data transmission apparatus is provided. The data transmission apparatus supports full-duplex communication, and the data transmission apparatus can implement a function of the data transmission method provided in any one of the first aspect or the possible implementations of the first aspect. The function may be implemented by hardware, or may be implemented by executing corresponding software by hardware. The hardware or software includes one or more units corresponding to the foregoing function. For example, the data transmission apparatus may include a sending unit and a receiving unit.

In a possible implementation of the third aspect, a structure of the data transmission apparatus includes a processor, a memory, a communications interface, and a bus, where the processor, the memory, and the communications interface are connected by using the bus. The memory is configured to store program code. When the program code is executed by the processor, the data transmission apparatus is enabled to perform steps in the data transmission method provided in any one of the first aspect or the possible implementations of the first aspect.

According to a fourth aspect, a data transmission apparatus is provided. The data transmission apparatus supports full-duplex communication, and the data transmission apparatus can implement a function of the data transmission method provided in any one of the second aspect or the possible implementations of the second aspect. The function may be implemented by hardware, or may be implemented by executing corresponding software by hardware. The hardware or software includes one or more units corresponding to the foregoing function. For example, the data transmission apparatus may include a sending unit and a receiving unit.

In a possible implementation of the fourth aspect, a structure of the data transmission apparatus includes a processor, a memory, a communications interface, and a bus, where the processor, the memory, and the communications interface are connected by using the bus. The memory is configured to store program code. When the program code is executed by the processor, the data transmission apparatus is enabled to perform steps in the data transmission method provided in any one of the second aspect or the possible implementations of the second aspect.

According to a fifth aspect, a computer readable storage medium is provided. The computer readable storage medium stores an instruction. When the instruction is run on a computer, the computer is enabled to perform the data transmission method provided in any one of the first aspect or the possible implementations of the first aspect.

According to a sixth aspect, a computer readable storage medium is provided. The computer readable storage medium stores an instruction. When the instruction is run on a computer, the computer is enabled to perform the data transmission method provided in any one of the second aspect or the possible implementations of the second aspect.

According to a seventh aspect, a computer program product including an instruction is provided. When the computer program product is run on a computer, the computer is enabled to perform the data transmission method provided in any one of the first aspect or the possible implementations of the first aspect.

According to an eighth aspect, a computer program product including an instruction is provided. When the computer program product is run on a computer, the computer is enabled to perform the data transmission method provided in any one of the second aspect or the possible implementations of the second aspect.

It may be understood that any data transmission method apparatus, computer storage medium, or computer program product provided above is configured to perform the corresponding method provided above. Therefore, for beneficial effects that can be achieved by the apparatus, computer storage medium, or computer program product, refer to beneficial effects in the corresponding method provided above. Details are not described herein again.

### BRIEF DESCRIPTION OF DRAWINGS

FIG. 1 is a schematic diagram of full-duplex communication;
FIG. 2 is a schematic structural diagram of a communications system according to an embodiment of this application;
FIG. 3 is a schematic structural diagram of another communications system according to an embodiment of this application;
FIG. 4 is a schematic flowchart of a data transmission method according to an embodiment of this application;
FIG. 5 is a schematic structural diagram of scheduling information according to an embodiment of this application;
FIG. 6 is a schematic diagram of data transmission between devices according to an embodiment of this application;
FIG. 7 is a schematic structural diagram of an FD trigger frame according to an embodiment of this application;
FIG. 8 is another schematic diagram of data transmission between devices according to an embodiment of this application;
FIG. 9 is a schematic flowchart of another data transmission method according to an embodiment of this application;
FIG. 10 is a schematic structural diagram of a first data transmission apparatus according to an embodiment of this application;
FIG. 11 is a schematic structural diagram of a second data transmission apparatus according to an embodiment of this application;
FIG. 12 is a schematic structural diagram of a third data transmission apparatus according to an embodiment of this application; and
FIG. 13 is a schematic structural diagram of a fourth data transmission apparatus according to an embodiment of this application.

### DESCRIPTION OF EMBODIMENTS

In a full duplex (full duplex, FD) technology, a node may send and receive data on a same time-frequency resource, that is, send and receive data on a same time resource and a same frequency resource. In embodiments of this application, "a same time-frequency resource" may mean that a resource for sending and receiving data includes a same slot or symbol in time domain and includes a same subcarrier in frequency domain.

The embodiments of this application are applicable to data communication between a node supporting full-duplex communication and one or more other nodes. Related wireless communication scenarios may include communication between an access point (access point, AP) and a station (station, STA), communication between APs, communication between STAs, and the like.

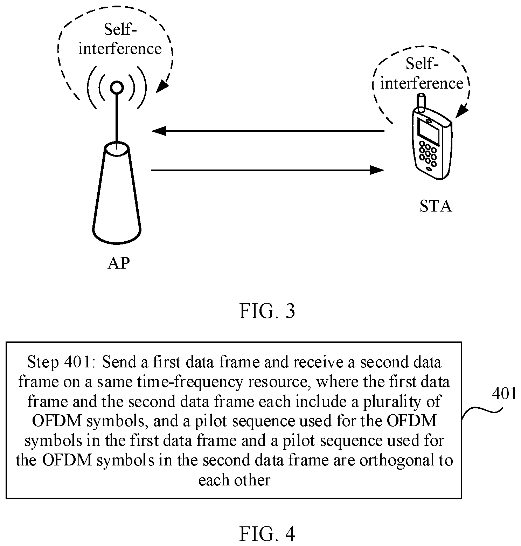

In communication between an AP and a STA, the AP may support full-duplex communication, and the STA may support half-duplex communication or full-duplex communication. When the STA supports half-duplex communication, the AP may communicate with two STAs (for example, in a wireless communications system shown in FIG. 2, an AP supports full-duplex communication, both a STA 1 and a STA 2 support half-duplex communication, and the AP communicates with both the STA 1 and the STA 2). When the STA supports full-duplex communication, a scenario of communication between the AP and the STA may be shown in FIG. 3 or FIG. 2 (in this case, the STA does not perform a full-duplex capability). Similarly, in communication between APs, one of the APs may support full-duplex communication, and the other one or two APs may support half-duplex communication or full-duplex communication; in communication between STAs, one of the STAs may support full-duplex communication, and the other one or two STAs may support half-duplex communication or full-duplex communication.

In the embodiments of this application, communication between an AP and a STA is mainly used as an example for description. In actual application, the AP and the STA may be a communications server, a router, a switch, a bridge, a computer, a mobile phone, a portable device, a wearable device, or the like. A difference between the AP and the STA lies in that, the AP may provide a wireless access service, allow access of another wireless device, and provide data access, whereas the STA may also be referred to as a wireless terminal, does not accept wireless access, and may be connected to the AP.

FIG. 4 is a schematic flowchart of a data transmission method according to an embodiment of this application. The method is applied to a device that supports full-duplex communication, and the method includes the following several steps.

Step 401: The device sends a first data frame and receives a second data frame on a same time-frequency resource. OFDM modulation is used for both the first data frame and the second data frame, and a pilot sequence used for OFDM symbols in the first data frame and a pilot sequence used for OFDM symbols in the second data frame are orthogonal to each other.

The device may be an AP, or may be a STA. Herein, an example in which the device is an AP and the AP communicates with a STA is used for description. When the STA supports full-duplex communication, the first data frame and the second data frame may be data for communication between the AP and one STA. For example, the AP sends the first data frame to a STA 1 and receives the second data frame from the STA 1 on a same time-frequency resource. Correspondingly, for the STA 1, the STA 1 receives the first data frame from the AP and sends the second data frame to the AP on the time-frequency resource. When the STA does not support full-duplex communication, the first data frame and the second data frame may be data for communication between the AP and two STAs. For example, the AP sends the first data frame to a STA 1 and receives the second data frame from a STA 2 on a same time-frequency resource. Correspondingly, for the STA 1, the STA 1 receives the first data frame from the AP on the time-frequency resource; for the STA 2, the STA 2 sends the second data frame to the AP on the time-frequency resource.

In addition, that the first data frame and the second data frame each include a plurality of OFDM symbols means that OFDM modulation is used for both the first data frame and the second data frame, and a plurality of OFDM symbols are obtained through modulation. Each OFDM symbol in the first data frame and the second data frame may include a plurality of subcarriers in corresponding frequency domain, and some of the plurality of subcarriers may be used to send a pilot sequence. The pilot sequence used for the OFDM symbols in the first data frame and the pilot sequence used for the OFDM symbols in the second data frame are orthogonal to each other. "Orthogonal to each other" may mean that an inner product of the two pilot sequences is zero. For example, it is assumed that the two pilot sequences are respectively a=(x1, x2, ..., xn) and b=(y1, y2, ..., yn). In this case, that an inner product of a and b is zero means x1y1+x2y2+...+xnyn=0.

In actual application, different bandwidths may be used for communication between devices. When different bandwidths are used, OFDM symbols in data frames of the devices include different quantities of subcarriers in corresponding frequency domain. Bandwidths used for communication of the device may include 20 MHz, 40 MHz, 80 MHz, 160 MHz, and the like. An OFDM symbol in a data frame transmitted in each bandwidth may include a plurality of subcarriers, and a quantity of the plurality of subcarriers is related to a size of a subcarrier spacing in the OFDM symbol. For example, when a subcarrier spacing in an OFDM symbol is 321.5 kHz, the OFDM symbol in a data frame transmitted in the 20 MHz bandwidth may include 64 subcarriers; when a subcarrier spacing in an OFDM symbol is 78.125 kHz, the OFDM symbol in a data frame transmitted in the 20 MHz bandwidth may include 256 subcarriers.

In addition, a communications system may further aggregate a plurality of consecutive subcarriers to form a resource block (for example, aggregate N consecutive subcarriers to form an N resource block, where N may represent a quantity of subcarriers included in the resource block), and allocate the resource block to the device for transmitting data, that is, the device may also perform communication by using the resource block. To support OFDMA transmission, 802.11ax divides bandwidths of 20 M, 40 M, 80 M, and 160 M into the following plurality of types of resource blocks: a 26 resource block, a 52 resource block, a 106 resource block, a 242 resource block, a 484 resource block, a 996 resource block, and a 1992 resource block, where a subcarrier spacing is 78.125 kHz.

Specifically, when the device uses a different bandwidth or a different resource block, a length of a pilot sequence used for an OFDM symbol in a data frame of the device is also different. For ease of description, it is assumed that the two mutually orthogonal pilot sequences are a first pilot sequence and a second pilot sequence. The first pilot sequence may be the pilot sequence used for the OFDM symbols in the first data frame, and the second pilot sequence may be the pilot sequence used for the OFDM symbols in the second data frame. Alternatively, the first pilot sequence is the pilot sequence used for the OFDM symbols in the second data frame, and the second pilot sequence is the pilot sequence used for the OFDM symbols in the first data frame. This is not specifically limited in this embodiment of this application.

In a possible implementation, when the device uses the 26 resource block for communication, lengths of the first pilot sequence and the second pilot sequence are 2, the first pilot sequence may be [1 -1], and the second pilot sequence may be either of [1 1] and [-1 -1].

In a possible implementation, when the device uses the 52 resource block, the 106 resource block, or 20 MHz with a subcarrier spacing of 312.5 kHz for communication, lengths of the first pilot sequence and the second pilot sequence are 4, the first pilot sequence may be [1 1 1 -1], and the second pilot sequence may be any one of [1 1-1 1], [1 -1 1 1], [1 -1 -1 -1], [-1 1 1 1], [-1 1-1-1], and [-1-11 -1]. The 20 MHz bandwidth with the subcarrier spacing of 312.5 kHz is a non-OFDMA resource block.

In a possible implementation, when the device uses a 40 MHz bandwidth with a subcarrier spacing of 312.5 kHz for communication, lengths of the first pilot sequence and the second pilot sequence are 6, the first pilot sequence may be [1 1 1 -1 -1 1], and the second pilot sequence may be any one of those shown in Table 1 below. The 40 MHz bandwidth with the subcarrier spacing of 312.5 kHz is a non-OFDMA resource block.

**Table 1**

| Sequence number | Second pilot sequence | Sequence number | Second pilot sequence |
|---|---|---|---|
| 1 | [1 1 1 1 1 -1] | 11 | [-1 1 1 1 1 1] |
| 2 | [1 1 -1 1 1 1] | 12 | [-1 1 1 1 -1 -1] |
| 3 | [1 1 -1 1 -1 -1] | 13 | [-1 1 1 -1 1 -1] |
| 4 | [1 1 -1 -1 1 -1] | 14 | [-1 1 -1 1 -1 1] |
| 5 | [1 -1 1 1 1 1] | 15 | [-1 1 -1 -1 1 1] |
| 6 | [1 -1 1 1 -1 -1] | 16 | [-1 1 -1 -1 -1 -1] |
| 7 | [1 -1 1- 1 1 -1] | 17 | [-1 -1 1 1 -1 1] |
| 8 | [1 -1 -1 1 -1 1] | 18 | [-1 -1 1 -1 -1 -1] |
| 9 | [1 -1 -1 -1 1 1] | 19 | [-1 -1 1 -1 -1 -1] |
| 10 | [1 -1 -1 -1 -1 -1] | 20 | [-1 -1 -1 -1 -1 1] |

In a possible implementation, when the device uses the 242 resource block or an 80 MHz bandwidth with a subcarrier spacing of 312.5 kHz for communication, lengths of the first pilot sequence and the second pilot sequence are 8, the first pilot sequence may be [1 1 1 -1-1 1 1 1], and the second pilot sequence may be any one of those shown in Table 2 below. The 80 MHz bandwidth with the subcarrier spacing of 312.5 kHz is a non-OFDMA resource block.

**Table 2**

| Sequence number | Second pilot sequence | Sequence number | Second pilot sequence |
|---|---|---|---|
| 1 | [1 1 1 1 1 1 -1 -1] | 36 | [-1 1 1 1 1 1 1 -1] |
| 2 | [1 1 1 1 1 -1 1 -1] | 37 | [-1 1 1 1 1 1 -1 1] |
| 3 | [1 1 1 1 1 -1 -1 1] | 38 | [-1 1 1 1 1 -1 1 1] |
| 4 | [1 1 1 1 -1 1 -1 -1 -1] | 39 | [-1 1 1 1 -1 1 -1 -1] |
| 5 | [1 1 1 -1 1 -1 -1 -1] | 40 | [-1 1 1 1 -1 -1 1 -1] |
| 6 | [1 1 -1 1 1 1 1 -1] | 41 | [-1 1 1 1 -1 -1 -1 1] |
| 7 | [1 -1 1 1 -1 1] | 42 | [-1 1 -1 1 -1 -1] |
| 8 | [1 1 -1 1 1 -1 1 1] | 43 | [-1 -1 1 1 -1 1 -1 1-1] |
| 9 | [1 1 -1 1 -1 1 -1 -1] | 44 | [-1 1 1 -1 1 -1 -1 1] |
| 10 | [1 1 -1 1 -1 -1 1 -1] | 45 | [-1 1 1 -1 -1 -1 -1 -1] |
| 11 | [1 -1 -1 1 -1 -1 -1 1] | 46 | [-1 1 -1 1 1 1 1 1] |
| 12 | [1 1 -1 1 1 -1 -1] | 47 | [-1 1 -1 1 -1 1 1 -1] |
| 13 | [1 1 -1 -1 1 -1 1 -1] | 48 | [-1 1 -1 1 -1 1 -1 1] |
| 14 | [1 1 -1 -1 1 -1 -1 1] | 49 | [-1 1 -1 1 -1 -1 1 1] |
| 15 | [1 1 -1 -1 -1 -1 -1 -1] | 50 | [-1 1 -1 -1 1 1 1 -1] |
| 16 | [1 -1 1 1 1 1 1 -1] | 51 | [-1 1 -1 -1 1 1 -1 1] |
| 17 | [1 -1 1 1 1 1 -1 1] | 52 | [-1 1 -1 -1 1 -1 1 1] |
| 18 | [1 -1 1 1 1 -1 1 1] | 53 | [-1 1 -1 -1 -1 1 -1 -1] |
| 19 | [1 -1 1 1 -1 1 -1 -1] | 54 | [-1 1 -1 -1 -1 -1 1 -1] |
| 20 | [1 -1 1 1 -1 1 -1 -1] | 55 | [-1 1 -1 -1 -1 -1 -1 1] |
| 21 | [1 -1 1 1 -1 -1 -1 1] | 56 | [-1 -1 1 1 1 1 1] |
| 22 | [1 -1 1 -1 1 1 -1 -1] | 57 | [-1 -1 1 1 -1 1 1 -1] |
| 23 | [1 -1 1 -1 1 -1 1 -1] | 58 | [-1 -1 1 1 -1 1 -1 1] |
| 24 | [1 -1 1 -1 1 -1 -1 1] | 59 | [-1 -1 1 1 -1 -1 1 1] |
| 25 | [ 1 -1 1- 1- 1- 1- 1 -1] | 60 | [-1 -1 1 -1 1 1 1-1] |
| 26 | [1 -1 -1 1 1 1 1] | 61 | [-1 -1 1 -1 1 -1 1] |
| 27 | [1 -1 -1 1 -1 1 1 -1] | 62 | [-1 -1 1 -1 1 -1 1 1] |
| 28 | [1 -1 -1 1 -1 1 -1 1] | 63 | [-1 -1 1- 1 -1 1 -1 -1] |
| 29 | [1 -1 -1 1 -1 -1 1 1] | 64 | [-1 -1 1 -1 -1 -1 1 -1] |
| 30 | [1 -1 -1 -1 1 1 1 -1] | 65 | [-1 -1 1 -1 -1 -1 -1 1] |
| 31 | [1 -1 -1 -1 1 1 -1 1] | 66 | [-1 -1 -1 1 -1 1 1 1] |
| 32 | [1 -1 -1 -1 1 -1 1 1] | 67 | [-1 -1 -1 -1 1 1 1 1] |
| 33 | [1 -1 -1 -1 -1 1 -1 -1] | 68 | [-1 -1 -1 -1 -1 1 1 -1] |
| 34 | [1 -1 -1 -1 -1 -1 1 -1] | 69 | [-1 -1 -1 -1 -1 1- 1 1] |
| 35 | [1 -1 -1 -1 -1 -1 -1 1] | 70 | [-1 -1 -1 -1 -1 -1 1 1] |

In a possible implementation, when the device uses the 484 resource block or a 160 MHz bandwidth with a subcarrier spacing of 312.5 kHz for communication, lengths of the first pilot sequence and the second pilot sequence are 16, the first pilot sequence is [1 1 1 -1 -1 1 1 1 1 1 1 -1 -1 1 1 1], and the second pilot sequence is any one of those shown in Table 3 below. In other words, the first pilot sequence and the second pilot sequence corresponding to the 484 resource block or the 160 MHz bandwidth are twofold repetitions of the first pilot sequence and the second pilot sequence corresponding to the 242 resource block. The 160 MHz bandwidth with the subcarrier spacing of 312.5 kHz is a non-OFDMA resource block.

**Table 3**

| Sequence number | Second pilot sequence |
|---|---|
| 1 | [1 1 1 1 1 1 -1 -1 1 1 1 1 1 1 -1 -1] |
| 2 | [1 1 1 1 1 -1 1 -1 1 1 1 1 1 -1 1 -1] |
| 3 | [1 1 1 1 1 -1 -1 1 1 1 1 1 1 -1 -1 1] |
| 4 | [1 1 1 1 -1 -1 -1 -1 1 1 1 1 -1 -1 -1 -1] |
| 5 | [1 1 1 -1 1 -1 -1 -1 1 1 1 -1 1 -1 -1 -1] |
| 6 | [1 -1 1 1 -1 1 -1 1 1 1 1 -1] |
| 7 | [1 -1 1 1 -1 1 1 -1 1 1 -1 1] |
| 8 | [1 1 -1 1 1 -1 1 1 1 1 -1 1 -1 1] |
| 9 | [1 1 -1 1 -1 1 -1 -1 1 1 -1 1 -1 1 -1 -1] |
| 10 | [1 1 -1 1 -1 -1 1 -1 1 1 -1 1 -1 -1 1 -1] |
| 11 | [1 1 -1 1 -1 -1 -1 1 1 1 -1 1 -1 -1 -1 1] |
| 12 | [1 1 -1 -1 1 1 -1 -1 1 1 -1 -1 1 1 -1 -1] |
| 13 | [1 1 -1 -1 1 -1 1 -1 1 1 -1 -1 1 -1 1 -1] |
| 14 | [1 1 -1 -1 1 -1 -1 1 1 1 -1 -1 1 -1 -1 1] |
| 15 | [1 1 -1 -1 -1 -1 -1 -1 1 1 -1 -1 -1 -1 -1 -1] |
| 16 | [1 -1 1 1 1 1 1 -1 -1 1 1 1 1 1-1] |
| 17 | [1 -1 1 1 1 1 -1 1 1 -1 1 1 1 1 -1 1] |
| 18 | [1 -1 1 1 1 -1 1 1 1 -1 1 1 1 -1 1 1] |
| 19 | [1 -1 1 1 -1 1 -1 -1 1 -1 1 1 -1 1 -1 -1] |
| 20 | [1 -1 1 1 -1 -1 1 -1 1 -1 1 1 -1 -1 1 -1] |
| 21 | [1 -1 1 1 -1 -1 -1 1 1 -1 1 1 -1 -1 -1 1] |
| 22 | [1 -1 1 -1 1 1 -1 -1 1 -1 1 -1 1 1 -1 -1] |
| 23 | [1 -1 1 -1 1 -1 1 -1 1 -1 1 -1 1 1 -1 -1] |
| 24 | [1 -1 1 -1 1 -1 -1 1 1 -1 1 - 1 1 - 1 -1 1] |
| 25 | [1 -1 1 -1 -1 -1 -1 -1 1 -1 1 -1 -1 -1 -1 -1] |
| 26 | [1 -1 -1 1 1 1 1 1 -1 -1 1 1 1 1] |
| 27 | [1 -1 -1 1- 1 1 1 -1 1 -1 -1 1 -1 1 1-1] |
| 28 | [1 -1 -1 1 -1 1 -1 1 1 -1 -1 1 -1 1 -1 1] |
| 29 | [1 -1 -1 1 -1 -1 1 1 1 -1 -1 1 -1 -1 1 1] |
| 30 | [1 -1 -1 -1 1 1 1 -1 1 -1 -1 -1 1 1 1 -1] |
| 31 | [1 -1 -1 -1 1 1 -1 1 1 -1 -1 -1 1 1 -1 1] |
| 32 | [1 -1 -1 -1 1 -1 1 1 1 -1 -1 -1 1 -1 1 1] |
| 33 | [1 -1 -1 -1 -1 1 -1 -1 1 -1 -1 -1 -1 1 -1 -1] |
| 34 | [1 -1 -1 -1 -1 -1 1 -1 1 - 1- 1 -1 -1 -1 1 -1] |
| 35 | [1 -1 -1 -1 -1 -1 -1 1 1 -1 -1 -1 -1 -1 -1 1] |
| 36 | [-1 1 1 1 1 1 1 -1 -1 1 1 1 1 1 1-1] |
| 37 | [-1 1 1 1 1 1 -1 1 -1 1 1 1 1 1 -1 1] |
| 38 | [-1 1 1 1 1 -1 1 1 -1 1 1 1 1 -1 1 1] |
| 39 | [-1 1 1 1 1 -1 1- 1 -1 -1 1 1 1 -1 1 -1 -1] |
| 40 | [-1 1 1 1 1 -1 -1 1 -1 -1 1 1 1 -1 -1 1 -1] |
| 41 | [-1 1 1 1 1 -1 -1 -1 1 -1 1 1 1 -1 -1 -1 1] |
| 42 | [-1 1 1 -1 1 1 -1 -1 -1 1 1 -1 1 1 -1 -1] |
| 43 | [-1 1 1 1 -1 1 -1 1 -1 -1 1 1 -1 1 -1 1-1] |
| 44 | [-1 1 1 1 -1 1 -1 -1 1 -1 1 1 -1 1 -1 -1 1] |
| 45 | [-1 1 1 -1 -1 -1 -1 -1 -1 1 1 -1 -1 -1 -1 -1] |
| 46 | [-1 1 -1 1 1 1 1 1 -1 1 -1 1 1 1 1 1] |
| 47 | [-1 1 1 -1 1 -1 1 1 -1 -1 1 -1 1 -1 1 1-1] |
| 48 | [-1 1 1 -1 1 -1 1 -1 1 -1 1 -1 1 -1 1 -1 1] |
| 49 | [-1 1 1 -1 1 -1 -1 1 1 -1 1 -1 1 -1 -1 1 1] |
| 50 | [-1 1 1 -1 -1 1 1 1 -1 -1 1 -1 -1 1 1 1 -1] |
| 51 | [-1 1 1 -1 -1 1 1 -1 1 -1 1 -1 -1 1 1 -1 1] |
| 52 | [-1 1 1 -1 -1 1 -1 1 1 -1 1 -1 -1 1 -1 1 1] |
| 53 | [-1 1 -1 -1 -1 1 -1 -1 -1 1 -1 -1 -1 1 -1 -1] |
| 54 | [-1 1 -1 -1 -1 -1 1 -1 -1 1 -1 -1 -1 -1 1 -1] |
| 55 | [-1 1 -1 -1 -1 -1 -1 1 -1 1 -1 -1 -1 -1 -1 1] |
| 56 | [-1 -1 1 1 1 1 1 1 -1 -1 1 1 1 1 1 1] |
| 57 | [-1 1 -1 1 1 -1 1 1 -1 -1 -1 1 1 -1 1 1 -1] |
| 58 | [-1 -1 1 1 -1 1 -1 1 -1 -1 1 1 -1 1 -1 1] |
| 59 | [-1 1 -1 1 1 -1 -1 1 1 -1 -1 1 1 -1 -1 1 1] |
| 60 | [-1 1 -1 1 -1 1 1 1 -1 -1 -1 1 -1 1 1 1 -1] |
| 61 | [-1 1 -1 1 -1 1 1 -1 1 -1 -1 1 -1 1 1 -1 1] |
| 62 | [-1 1 -1 1 -1 1 -1 1 1 -1 -1 1 -1 1 -1 1 1] |
| 63 | [-1 -1 1 -1 -1 1 -1 -1 -1 -1 1 -1 -1 1 -1 -1] |
| 64 | [-1 -1 1 -1 -1 -1 1 -1 -1 -1 1 -1 -1 -1 1 -1] |
| 65 | [-1 -1 1 -1 -1 -1 -1 1 -1 -1 1 -1 -1 -1 -1 1] |
| 66 | [-1 -1 -1 1 -1 1 1 1 -1 -1 -1 1 -1 1 1 1] |
| 67 | [-1 -1 -1 -1 1 1 1 1 -1 -1 -1 -1 1 1 1 1] |
| 68 | [-1 1 -1 -1 -1 -1 1 1 -1 -1 -1 -1 -1 -1 1 1 -1] |
| 69 | [-1 1 -1 -1 -1 -1 1 -1 1 -1 -1 -1 -1 -1 1 -1 1] |
| 70 | [-1 -1 -1 -1 -1 -1 1 1 -1 -1 -1 -1 -1 -1 1 1] |

In a possible implementation, when the device uses the 996 resource block for communication, lengths of the first pilot sequence and the second pilot sequence are 24, the first pilot sequence is [1 1 1 -1 -1 1 1 1 1 1 1 -1 -1 1 1 1 1 1 1 -1 -1 1 1 1], and the second pilot sequence is any one of those shown in Table 4 below. In other words, the first pilot sequence and the second pilot sequence corresponding to the 996 resource block are threefold repetitions of the first pilot sequence and the second pilot sequence corresponding to the 242 resource block.

**Table 4**

| Sequence number | Second pilot sequence |
|---|---|
| 1 | [1 1 1 1 1 1 -1 -1 1 1 1 1 1 1 -1 -1 1 1 1 1 1 1 -1 -1] |
| 2 | [1 1 1 1 1 -1 1 -1 1 1 1 1 1 -1 -1 1 1 1 1 1 -1 1 -1] |
| 3 | [1 1 1 1 1 -1 -1 1 1 1 1 1 1 -1 -1 1 1 1 1 1 1 -1 -1 1] |
| 4 | [1 1 1 1 -1 -1 -1 -1 1 1 1 1 -1 -1 -1 -1 1 1 1 1 -1 -1 -1 -1] |
| 5 | [1 1 1 -1 1 -1 -1 -1 1 1 1 -1 1 -1 -1 -1 1 1 1 -1 1 -1 -1 -1] |
| 6 | [1 1 -1 1 1 1 1 -1 1 1 -1 1 1 -1 1 1 -1 1 1 1 1 -1] |
| 7 | [1 1 -1 1 1 1 -1 1 1 1 -1 1 1 1 -1 1 1 1 -1 1 1 1 -1 1] |
| 8 | [1 1 -1 1 1 -1 1 1 1 1 -1 1 1 -1 1 1 1 1 -1 1 1 -1 1 1] |
| 9 | [1 1 -1 1 -1 1 -1 -1 1 1 -1 1 -1 1 -1 -1 1 1 -1 1 -1 1 -1 -1] |
| 10 | [1 1 -1 1 -1 -1 1 -1 1 1 -1 1 -1 -1 1 -1 1 1 -1 1 -1 -1 1 -1] |
| 11 | [1 1 -1 1 -1 -1 -1 1 1 1 -1 1 -1 -1 -1 1 1 1 -1 1 -1 -1 -1 1] |
| 12 | [1 1 -1 -1 1 1 -1 -1 1 1 -1 -1 1 1 -1 -1 1 1 -1 - 1 1 1 -1 -1] |
| 13 | [1 1 -1 -1 1 -1 1 -1 1 1 -1 -1 1 -1 1 -1 1 1 -1 -1 1 -1 1 -1] |
| 14 | [1 1 -1 -1 1 -1 -1 1 1 1 -1 -1 1 -1 -1 1 1 1 -1 -1 1 -1 -1 1] |
| 15 | [1 1 -1 -1 -1 -1 -1 -1 1 1 -1 -1 -1 -1 -1 -1 1 1 -1 -1 -1 -1 -1 -1] |
| 16 | [1 -1 1 1 1 1 1 -1 1 -1 1 1 1 1 1 -1 1 -1 1 1 1 1 1 -1] |
| 17 | [1 -1 1 1 1 1 -1 1 1 -1 1 1 1 1 -1 1 1 -1 1 1 1 1 -1 1] |
| 18 | [1 -1 1 1 1 1 -1 1 1 1 -1 1 1 -1 1 1 1 -1 1 1 -1 1 1] |
| 19 | [1 -1 1 1 -1 1 -1 -1 1 -1 1 1 -1 1 -1 -1 1 -1 1 1 -1 1 -1 -1] |
| 20 | [1 -1 1 1 -1 -1 1 -1 1 -1 1 1 -1 -1 1 -1 1 -1 1 1 -1 -1 1 -1] |
| 21 | [1 -1 1 1 -1 -1 -1 1 1 -1 1 1 -1 -1 -1 1 1 -1 1 1 -1 -1 -1 1] |
| 22 | [1 -1 1 -1 1 1 -1 -1 1 -1 1 -1 1 1 -1 -1 1 -1 1 -1 1 1 -1 -1] |
| 23 | [1 -1 1 -1 1 -1 1 -1 1 -1 1 -1 1 1 -1 -1 1 -1 1 -1 1 1 -1 -1] |
| 24 | [1 -1 1 -1 1 -1 -1 1 1 -1 1 -1 1 -1 -1 1 1 -1 1 -1 1 -1 -1 1] |
| 25 | [1 -1 1 -1 -1 -1 -1 -1 1 -1 1 -1 -1 -1 -1 -1 1 -1 1 -1 -1 -1 -1 -1] |
| 26 | [1 -1 -1 1 1 1 1 1 -1 -1 1 1 1 1 1 -1 -1 1 1 1 1] |
| 27 | [1 -1 -1 1 -1 1 1 -1 1 -1 -1 1 -1 1 1 -1 1 -1 -1 1 -1 1 1 -1] |
| 28 | [1 -1 -1 1 -1 1 -1 1 1 -1 -1 1 -1 1 -1 1 1 -1 -1 1 -1 1 -1 1] |
| 29 | [1 -1 -1 1 -1 -1 1 1 1 -1 -1 1 -1 -1 1 1 1 -1 -1 1 -1 -1 1 1] |
| 30 | [1 -1 -1 -1 1 1 1 -1 1 -1 -1 -1 1 1 1 -1 1 -1 -1 -1 1 1 1 -1] |
| 31 | [1 -1 -1 -1 1 1 -1 1 1 -1 -1 -1 1 1 -1 1 1 -1 -1 -1 1 1 -1 1] |
| 32 | [1 -1 -1 -1 1 -1 1 1 1 -1 -1 -1 1 -1 1 1 1 -1 -1 -1 1 -1 1 1] |
| 33 | [1 -1 -1 -1 -1 1 -1 -1 1-1-1 -1-1 1-1 -1 1 -1 -1 -1-1 1-1 -1] |
| 34 | [1 -1 -1 -1 -1 -1 1- 11 -1 -1 -1 -1 -1 1- 1 1 -1 -1 -1 -1 -1 1-1] |
| 35 | [1 -1 -1 -1 -1 -1 -1 1 1 -1 -1 -1 -1 -1 -1 1 1 -1 -1 -1 -1 -1 -1 1] |
| 36 | [-1 1 1 1 1 -1 -1 1 1 1 1 1 -1 -1 1 1 1 1 1 -1] |
| 37 | [-1 1 1 1 1 1 -1 1 -1 1 1 1 1 1 -1 1 -1 1 1 1 1 1 -1 1] |
| 38 | [-1 1 1 1 1 -1 1 1- 1 1 1 1 1 -1 1 1 -1 1 1 1 1 -1 1 1] |
| 39 | [-1 1 1 1 -1 1- 1- 1- 1 1 1 1 -1 1 -1 -1 -1 1 1 1 -1 1 -1 -1] |
| 40 | [-1 1 1 1 1- 1- 1 1 -1 -1 1 1 1 -1 -1 1 -1 -1 1 1 1 -1 -1 1-1] |
| 41 | [-1 1 1 1- 1- 1 -1 1 -1 1 1 1 -1 -1 -1 1 -1 1 1 1 -1 -1 -1 1] |
| 42 | [-1 1 1 1 -1 1 1 -1 -1 -1 1 1 -1 1 1 -1 -1 -1 1 1 -1 1 1-1-1] |
| 43 | [-1 1 1 -1 1 -1 1 -1 -1 1 1 -1 1 -1 1 -1 -1 1 1 -1 1 -1 1 -1] |
| 44 | [-1 1 1 1 -1 1 -1 -1 1 -1 1 1 -1 1 -1 -1 1 -1 1 1 -1 1 -1-1 1] |
| 45 | [-1 1 1 -1 -1 -1 -1 -1 -1 1 1 -1 -1 -1-1 -1 -1 1 1 -1-1 -1-1 -1] |
| 46 | [-1 1 -1 1 1 1 1 1 -1 1- 1 1 1 1 1 1 -1 1 -1 1 1 1 1 1] |
| 47 | [-1 1 -1 1 -1 1 1 -1 -1 1 -1 1 -1 1 1 -1 -1 1 -1 1 -1 1 1 -1] |
| 48 | [-1 1 1 -1 1 -1 1 -1 1 -1 1 -1 1 -1 1 -1 1 -1 1 -1 1 -1 1 -1 1] |
| 49 | [-1 1 1 -1 1 -1 -1 1 1 -1 1 -1 1 -1 -1 1 1 -1 1 -1 1 -1 -1 1 1] |
| 50 | [-1 1 1 -1 -1 1 1 1 -1 -1 1 -1 -1 1 1 1 -1 -1 1 -1 -1 1 1 1 -1] |
| 51 | [-1 1 1 -1 -1 1 1 -1 1 -1 1 -1 -1 1 1 -1 1 -1 1 -1 -1 1 1 -1 1] |
| 52 | [-1 1 1 -1 -1 1 -1 1 1 -1 1 -1 -1 1 -1 1 1 -1 1 -1 -1 1 -1 1 1] |
| 53 | [-1 1 -1 -1 -1 1 -1 -1 -1 1-1 -1 -1 1 -1 -1 -1 1 -1 -1 -1 1 -1 -1] |
| 54 | [-1 1 -1 -1 -1 -1 1 -1 -1 1 -1 -1 -1 -1 1 -1 -1 1 -1 -1 -1 -1 1 -1] |
| 55 | [-1 1 -1-1 -1-1 -1 1 -1 1 -1 -1 -1 -1 -1 1 -1 1 -1 -1 -1 -1 -1 1] |
| 56 | [-1 -1 1 1 1 1 1 1 -1 -1 1 1 1 1 1 -1 -1 1 1 1 1 1 1] |
| 57 | [-1 -1 1 1 -1 1 1 -1 -1 -1 1 1 -1 1 1 -1 -1 -1 1 1 -1 1 1-1] |
| 58 | [-1 -1 1 1 -1 1 -1 1 -1 -1 1 1 -1 1 -1 1 -1 -1 1 1 -1 1 -1 1] |
| 59 | [-1 -1 1 1 -1 -1 1 1 -1 -1 1 1 -1 -1 1 1 -1 -1 1 1 -1 -1 1 1] |
| 60 | [-1 -1 1 -1 1 1 1 -1 -1 -1 1 -1 1 1 1 -1 -1 -1 1 -1 1 1 1 -1] |
| 61 | [-1 -1 1 -1 1 1 -1 1 -1 -1 1 -1 1 1 -1 1 -1 -1 1 -1 1 1 -1 1] |
| 62 | [-1 -1 1 -1 1 -1 1 1 -1 -1 1 -1 1 -1 1 1 -1 -1 1 -1 1 -1 1 1] |
| 63 | [-1 -1 1 -1 -1 1 -1-1 -1 -1 1 -1 -1 1-1 -1 -1 -1 1 -1-1 1-1 -1] |
| 64 | [-1 -1 1 -1 -1-1 1-1 -1 -1 1 -1 -1 -1 1 -1- 1 -1 1 -1-1 -1 1-1] |
| 65 | [-1 -11 -1 -1-1 -1 1 -1 -1 1 -1 -1 -1-1 1 -1 -1 1 -1-1 -1-1 1] |
| 66 | [-1 -1 -1 1 -1 1 1 1 -1 -1 -1 1 -1 1 1 1 -1 -1 -1 1 -1 1 1 1] |
| 67 | [-1 -1 -1 -1 1 1 1 1 -1 -1 -1 -1 1 1 1 1 -1 -1- 1 -1 1 1 1 1] |
| 68 | [-1 1 -1 -1 -1 -1 1 1 -1 -1 -1 -1 -1 -1 1 1 -1 -1 -1 -1 -1 -1 1 1 -1] |
| 69 | [-1 1 -1 -1 -1 -1 1 -1 1 -1 -1 -1 -1 -1 1 -1 1 -1 -1 -1 -1 -1 1 -1 1] |
| 70 | [-1 -1 -1 -1 -1 -1 1 1 -1 -1 -1 -1 -1 -1 1 1 -1 -1 -1 -1 -1 -1 1 1] |

In a possible implementation, when the device uses the 1992 resource block for communication, lengths of the first pilot sequence and the second pilot sequence are 32, the first pilot sequence is [1 1 1 -1 -1 1 1 1 1 1 1 -1 -1 1 1 1 1 1 1 -1 -1 1 1 1 1 1 1 -1 -1 1 1 1], and the second pilot sequence is any one of those shown in Table 5 below. In other words, the first pilot sequence and the second pilot sequence corresponding to the 1996 resource block are fourfold repetitions of the first pilot sequence and the second pilot sequence corresponding to the 242 resource block.

**Table 5**

| Sequence number | Second pilot sequence |
|---|---|
| 1 | [1 1 1 1 1 1-1-1 1 1 1 1 1 1-1-1 1 1 1 1 1 1 -1 -1 1 1 1 1 1 1 -1-1] |
| 2 | [1 1 1 1 1 -1 1 -1 1 1 1 1 1 -1 1 -1 1 1 1 1 1 -1 1- 1 1 1 1 1 1 -1 1-1] |
| 3 | [1 1 1 1 1 -1 -1 1 1 1 1 1 1 -1 -1 1 1 1 1 1 1 -1 -1 1 1 1 1 1 1 -1 -1 1] |
| 4 | [1 1 1 1 -1 -1 -1 -1 1 1 1 1 -1 -1 -1 -1 1 1 1 1 -1 -1 -1 -1 1 1 1 1 -1 -1 -1 -1] |
| 5 | [1 1 1 -1 1 -1 -1 -1 1 1 1 -1 1 -1 -1 -1 1 1 1 -1 1 -1 -1 -1 1 1 1 -1 1 -1-1-1] |
| 6 | [1 1 -1 1 1 1 1 -1 1 1 -1 1 1 1 1 -1 1 1 -1 1 1 1 1 -1 1 1 -1 1 1 1 1-1] |
| 7 | [1 1 -1 1 1 1 -1 1 1 1 -1 1 1 1 -1 1 1 1 -1 1 1 1 -1 1 1 1 -1 1 1 1 -1 1] |
| 8 | [1 1 -1 1 1 -1 1 1 1 1 -1 1 1 -1 1 1 1 1 -1 1 1 -1 1 1 1 1 -1 1 1 -1 1 1] |
| 9 | [1 1 -1 1 -1 1 -1 -1 1 1 -1 1 -1 1 -1 -1 1 1 -1 1 -1 1 -1 -1 1 1 -1 1-1 1 -1 -1] |
| 10 | [1 1 -1 1 -1 -1 1 -1 1 1 -1 1 -1 -1 1 -1 1 1 -1 1 -1 -1 1 -1 1 1 -1 1-1 -1 1 -1] |
| 11 | [1 1 -1 1 -1 -1 -1 1 1 1 -1 1 -1 -1 -1 1 1 1 -1 1 -1 -1-1 1 1 1 -1 1-1 -1 -1 1] |
| 12 | [1 1 -1 -1 1 1 -1 -1 1 1 -1 -1 1 1 -1 -1 1 1 -1 -1 1 1 -1 -1 1 1 -1 -1 1 1 -1 -1] |
| 13 | [1 1 -1 -1 1 -1 1 -1 1 1 -1 -1 1 -1 1 -1 1 1 -1 -1 1 -1 1 -1 1 1 -1 -1 1 -1 1 -1] |
| 14 | [1 1 -1 -1 1 -1 -1 1 1 1 -1 -1 1 -1 -1 1 1 1 -1 -1 1 -1 -1 1 1 1 -1 -1 1 -1 -1 1] |
| 15 | [1 1 -1 -1 -1 -1 -1 -1 1 1 -1 -1 -1 -1 -1 -1 1 1 -1 -1 -1 -1 -1 -1 1 1 -1 -1 -1 -1 -1 -1] |
| 16 | [1 -1 1 1 1 1 1 -1 1 -1 1 1 1 1 1 -1 1 -1 1 1 1 1 1 -1 1 -1 1 1 1 1 1-1] |
| 17 | [1 -1 1 1 1 1 -1 1 1 -1 1 1 1 1 -1 1 1 -1 1 1 1 1 -1 1 1 -1 1 1 1 1 -1 1] |
| 18 | [1 -1 1 1 1 -1 1 1 1 -1 1 1 1 -1 1 1 1 -1 1 1 1 -1 1 1 1 -1 1 1 1 -1 1 1] |
| 19 | [1 -1 1 1 -1 1 -1 -1 1 -1 1 1 -1 1 -1 -1 1 -1 1 1 -1 1 -1 -1 1 -1 1 1-1 1 -1 -1] |
| 20 | [1 -1 1 1 -1 -1 1 -1 1 -1 1 1 -1 -1 1 -1 1 -1 1 1 -1 -1 1 -1 1 -1 1 1-1 -1 1 -1] |
| 21 | [1 -1 1 1 -1 -1 -1 1 1 -1 1 1 -1 -1 -1 1 1 -1 1 1 -1 -1 -1 1 1 -1 1 1-1 -1 -1 1] |
| 22 | [1 -1 1 -1 1 1 -1 -1 1 -1 1 -1 1 1 -1 -1 1 -1 1 -1 1 1 -1 -1 1 -1 1 -1 1 1 -1 -1] |
| 23 | [1 -1 1 -1 1 -1 1 -1 1 -1 1 -1 1 1 -1 -1 1 -1 1 -1 1 1 -1 -1 1 -1 1 -1 1 1 -1 -1] |
| 24 | [1 -1 1 -1 1 -1 -1 1 1 -1 1 -1 1 -1 -1 1 1 -1 1 -1 1 -1 -1 1 1 -1 1 -1 1 -1 -1 1] |
| 25 | [1 -1 1 -1 -1 -1 -1 -1 1 -1 1 -1 -1 -1 -1 -1 1 -1 1 -1 -1 -1 -1 -1 1 -1 1 -1 -1 -1 -1 -1] |
| 26 | [1 -1 -1 1 1 1 1 1 1 -1 -1 1 1 1 1 1 1 -1 -1 1 1 1 1 1 1 -1 -1 1 1 1 1 1] |
| 27 | [1 -1 -1 1 -1 1 1 -1 1 -1 -1 1 -1 1 1 -1 1 -1 -1 1 -1 1 1 -1 1 -1 -1 1 -1 1 1 -1] |
| 28 | [1 -1 -1 1 -1 1 -1 1 1 -1 -1 1 -1 1 -1 1 1 -1 -1 1 -1 1 -1 1 1 -1 -1 1 -1 1 1 -1] |
| 29 | [1 -1 -1 1 -1 -1 1 1 1 -1 -1 1 -1 -1 1 1 1 -1 -1 1 -1 -1 1 1 1 -1 -1 1 -1 -1 1 1] |
| 30 | [1 -1 -1 -1 1 1 1 -1 1 -1 -1 -1 1 1 1 -1 1 -1 -1 -1 1 1 1 -1 1 -1 -1-1 1 1 1 -1] |
| 31 | [1 -1 -1 -1 1 1 -1 1 1 -1 -1 -1 1 1 -1 1 1 -1 -1 -1 1 1 -1 1 1 -1 -1-1 1 1 -1 1] |
| 32 | [1 -1 -1 -1 1 -1 1 1 1 -1 -1 -1 1 -1 1 1 1 -1 -1 -1 1 -1 1 1 1 -1 -1-1 1 -1 1 1] |
| 33 | [1 -1 -1 -1 -1 1 -1 -1 1 -1 -1 -1 -1 1 -1 -1 1 -1 -1 -1 -1 1 -1 -1 1 -1 -1 -1 -1 1 -1 -1] |
| 34 | [1 -1 -1 -1 -1 -1 1 -1 1 -1 -1 -1 -1 -1 1 -1 1 -1 -1 -1 -1 -1 1 -1 1 -1 -1 -1 -1 1 -1 -1] |
| 35 | [1 -1 -1 -1 -1 -1 -1 1 1 -1 -1 -1 -1 -1 -1 1 1 -1 -1 -1 -1 -1 -1 1 1 -1 -1 -1 -1 -1 -1 1] |
| 36 | [-1 1 1 1 1-1 -1 1 1 1 1 1-1 -1 1 1 1 1 1-1 -1 1 1 1 1 1-1] |
| 37 | [-1 1 1 1 1 1 -1 1 -1 1 1 1 1 1 -1 1 -1 1 1 1 1 1 -1 1 -1 1 1 1 1 1 -1 1] |
| 38 | [-1 1 1 1 1 -1 1 1 -1 1 1 1 1 -1 1 1 -1 1 1 1 1 -1 1 1 -1 1 1 1 -1 1 1] |
| 39 | [-1 1 1 1 -1 1 -1-1 -1 1 1 1 -1 1 -1-1 -1 1 1 1 -1 1 -1-1 -1 1 1 1 1- 1 1 1] |
| 40 | [-1 1 1 1 -1 -1 1 -1 -1 1 1 1 -1 -1 1 -1 -1 1 1 1 -1 -1 1 -1 -1 1 1 1-1 -1 1 -1] |
| 41 | [-1 1 1 1 -1 -1 -1 1 -1 1 1 1 -1 -1 -1 1 -1 1 1 1 -1 -1 -1 1 -1 1 1 1-1 -1 -1 1] |
| 42 | [-1 1 1 -1 1 1 -1 -1 -1 1 1 -1 1 1 -1 -1 -1 1 1 -1 1 1 -1 -1 -1 1 1 -1 1 1 -1 -1] |
| 43 | [-1 1 1 -1 1 -1 1 -1 -1 1 1 -1 1 -1 1 -1 -1 1 1 -1 1 -1 1 -1 -1 1 1 -1 1 -1 1 -1] |
| 44 | [-1 1 1 -1 1 -1 -1 1 -1 1 1 -1 1 -1 -1 1 -1 1 1 -1 1 -1 -1 1 -1 1 1 -1 1 -1 -1 1] |
| 45 | [-1 1 1 -1 -1 -1 -1 -1 -1 1 1 -1 -1 -1 -1 -1 -1 1 1 -1 -1 -1 -1 -1 -1 1 1 -1 -1 -1 -1 -1] |
| 46 | [-1 1 -1 1 1 1 1 1 -1 1 -1 1 1 1 1 1 -1 1 -1 1 1 1 1 1 -1 1 -1 1 1 1 1 1] |
| 47 | [-1 1 -1 1 -1 1 1 -1 -1 1 -1 1 -1 1 1 -1 -1 1 -1 1 -1 1 1 -1 -1 1 -1 1 1 1 1 1] |
| 48 | [-1 1 -1 1 -1 1 -1 1 -1 1 -1 1 -1 1 -1 1 -1 1 -1 1 -1 1 -1 1 -1 1 -1 1 -1 1 -1 1] |
| 49 | [-1 1 -1 1 -1 -1 1 1 -1 1 -1 1 -1 -1 1 1 -1 1 -1 1 -1 -1 1 1 -1 1 -1 1 -1 -1 1 1] |
| 50 | [-1 1 -1 -1 1 1 1 -1 -1 1 -1 -1 1 1 1 -1 -1 1 -1 -1 1 1 1 -1 -1 1 -1-1 1 1 1 -1] |
| 51 | [-1 1 -1 -1 1 1 -1 1 -1 1 -1 -1 1 1 -1 1 -1 1 -1 -1 1 1 -1 1 -1 1 -1-1 1 1 -1 1] |
| 52 | [-1 1 -1 -1 1 -1 1 1 -1 1 -1 -1 1 -1 1 1 -1 1 -1 -1 1 -1 1 1 -1 1 -1- 1 1 -1 1 1] |
| 53 | [-1 1 -1 -1 -1 1 -1 -1 -1 1 -1 -1 -1 1 -1 -1 -1 1 -1 -1 -1 1 -1 -1 -1 1 -1 -1 -1 1 -1 -1] |
| 54 | [-1 1 -1 -1 -1 -1 1 -1 -1 1 -1 -1 -1 -1 1 -1 -1 1 -1 -1 -1 -1 1 -1 -1 1 -1 -1 -1 -1 1 -1] |
| 55 | [-1 1 -1 -1 -1 -1 -1 1 -1 1 -1 -1 -1 -1 -1 1 -1 1 -1 -1 -1 -1 -1 1 -1 1 -1 -1 -1 -1 -1 1] |
| 56 | [-1 -1 1 1 1 1 1 1 -1 -1 1 1 1 1 1 1 -1 -1 1 1 1 1 1 1 -1 -1 1 1 1 1 1 1] |
| 57 | [-1 -1 1 1 -1 1 1 -1 -1 -1 1 1 -1 1 1 -1 -1 -1 1 1 -1 1 1 -1 -1 -1 1 1 -1 1 1 -1] |
| 58 | [-1 -1 1 1 -1 1 -1 1 -1 -1 1 1 -1 1 -1 1 -1 -1 1 1 -1 1 -1 1 -1 -1 1 1 -1 1 -1 1] |
| 59 | [-1 -1 1 1 -1 -1 1 1 -1 -1 1 1 -1 -1 1 1 -1 -1 1 1 -1 -1 1 1 -1 -1 1 1 -1 -1 1 1] |
| 60 | [-1 -1 1 -1 1 1 1 -1 -1 -1 1 -1 1 1 1 -1 -1 -1 1 -1 1 1 1 -1 -1 -1 1-1 1 1 1 -1] |
| 61 | [-1 -1 1 -1 1 1 -1 1 -1 -1 1 -1 1 1 -1 1 -1 -1 1 -1 1 1 -1 1 -1 -1 1-1 1 1 -1 1] |
| 62 | [-1 -1 1 -1 1 -1 1 1 -1 -1 1 -1 1 -1 1 1 -1 -1 1 -1 1 -1 1 1 -1 -1 1-1 1 1 -1 1] |
| 63 | [-1 -1 1 -1 -1 1 -1 -1 -1 -1 1 -1 -1 1 -1 -1 -1 -1 1 -1 -1 1 -1 -1 -1 -1 1 -1 -1 1 -1 -1] |
| 64 | [-1 -1 1 -1 -1 -1 1 -1 -1 -1 1 -1 -1 -1 1 -1 -1 -1 1 -1 -1 -1 1 -1 -1 -1 1 -1 -1 -1 1 -1] |
| 65 | [-1 -1 1 -1 -1 -1 -1 1 -1 -1 1 -1 -1 -1 -1 1 -1 -1 1 -1 -1 -1 -1 1 -1 -1 1 -1 -1 -1 -1 1] |
| 66 | [-1 -1 -1 1 -1 1 1 1 -1 -1 -1 1 -1 1 1 1 -1 -1 -1 1 -1 1 1 1 -1 -1 -1 1 -1 1 1 1] |
| 67 | [-1 -1 -1 -1 1 1 1 1 -1 -1 -1 -1 1 1 1 1 -1 -1 -1 -1 1 1 1 1 -1 -1 -1 -1 1 1 1 1] |
| 68 | [-1 -1 -1 -1 -1 1 1 -1 -1 -1 -1 -1 -1 1 1 -1 -1 -1 -1 -1 -1 1 1 -1 -1 -1 -1 -1 -1 1 1 -1] |
| 69 | [-1 -1 -1 -1 -1 1 -1 1 -1 -1 -1 -1 -1 1 -1 1 -1 -1 -1 -1 -1 1 -1 1 -1 -1 -1 -1 -1 1 -1 1] |
| 70 | [-1 -1 -1 -1 -1 -1 1 1 -1 -1 -1 -1 -1 -1 1 1 -1 -1 -1 -1 -1 -1 1 1 -1 -1 -1 -1 -1 -1 1 1] |

Further, the first data frame is aligned with the second data frame. That the first data frame is aligned with the second data frame may mean that a start location and an end location of the first data frame are respectively the same as those of the second data frame. For example, the plurality of OFDM symbols included in the first data frame are in a one-to-one alignment relationship with the plurality of OFDM symbols included in the second data frame, or two or more OFDM symbols in the first data frame are aligned with one OFDM symbol in the second data frame, or one OFDM symbol in the first data frame is aligned with two or more OFDM symbols in the second data frame.

One data frame may include a plurality of segments of OFDM symbols, and each segment of OFDM symbol may include a plurality of OFDM symbols. OFDM symbols in different segments in a same data frame may have different parameters, for example, subcarrier spacings and cyclic prefix lengths, but parameters of OFDM symbols in a same segment are the same. A transmission time of each OFDM symbol may include a partial OFDM symbol time and a cyclic prefix time. The partial OFDM symbol time may be determined by a subcarrier spacing.

Specifically, cyclic prefixes of two OFDM symbols at a same location in the first data frame and the second data frame have a same length, for example, the length of the cyclic prefix is 0.4 µs, 0.8 µs, 1.6 µs, or 3.2 µs. Two OFDM symbols at a same location in the first data frame and the second data frame have a same subcarrier spacing, for example, the subcarrier spacing is 78.125 kHz, and a partial OFDM symbol length is 3.2 µs, 6.4 µs, or 12.8 µs. Two OFDM symbols at a same location in the first data frame and the second data frame have a same start time, and correspondingly, the two OFDM symbols also have a same end time. In this case, a quantity of the plurality of OFDM symbols included in the first data frame is equal to a quantity of the plurality of OFDM symbols included in the second data frame.

For example, a length of each of the first 10 OFDM symbols in the first data frame is 4 µs, and a length of each of subsequent OFDM symbols in the first data frame is 16 µs. Correspondingly, according to the description that two OFDM symbols at a same location are aligned, a length of each of the first 10 OFDM symbols in the second data frame is also 4 µs, and a length of each of subsequent OFDM symbols in the second data frame is also 16 µs.

Further, when the device is the AP, the device may further send pilot sequence indication information to the STA before step 401, where the pilot sequence indication information may be used to indicate a pilot sequence used for an OFDM symbol in a data frame sent by the STA.

When the mutually orthogonal pilot sequences include the first pilot sequence and the second pilot sequence provided in the foregoing embodiment, the AP may send pilot sequence indication information to the STA, where the pilot sequence indication information may be used to instruct the STA to use the first pilot sequence (in this case, the AP may use the second pilot sequence), or used to indicate that a pilot sequence used by the AP is the second pilot sequence; or the pilot sequence indication information may be used to instruct the STA to use the second pilot sequence (in this case, the AP may use the first pilot sequence), or used to indicate that a pilot sequence used by the AP is the first pilot sequence. This ensures that the pilot sequences used by the AP and the STA are orthogonal to each other.

Optionally, the AP may alternatively send, to the STA, indication information used to indicate whether to use mutually orthogonal pilot sequences. For example, when the AP uses the first pilot sequence, by using the indication information, the AP may instruct the STA to use the second pilot sequence, or may instruct the STA not to use the second pilot sequence.

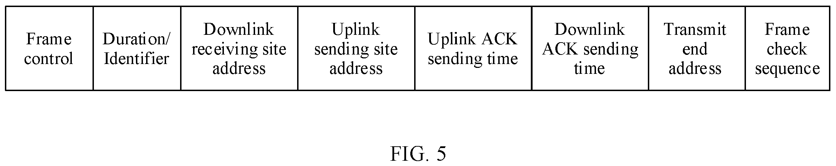

Further, when the device is the AP, and the AP communicates with two STAs that support half-duplex communication, the AP may further send scheduling information to each STA, where the scheduling information may be used to schedule uplink data and downlink data. Specifically, as shown in FIG. 5, the scheduling information may include a frame control field, a duration/identifier field, an uplink transmit end MAC address, a downlink receive end MAC address (optional), an uplink ACK sending time (optional), a downlink ACK sending time (optional), a transmit end address, and a frame check field. Herein, descriptions are provided by using an example in which the two STAs include a STA 1 and a STA 2, and the AP sends downlink data to the STA 1 and receives uplink data from the STA 2. In this case, the uplink transmit end MAC address may be a MAC address of the STA 2, the downlink receive end MAC address may be a MAC address of the STA 1, the uplink ACK sending time may be a time for sending an acknowledgment message to the STA 2 by the AP, the downlink ACK sending time may be a time for sending an acknowledgment message to the AP by the STA 1, and the transmit end address may be a MAC address of the AP.

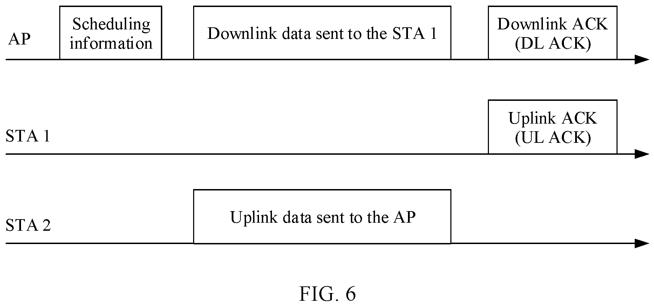

Correspondingly, the AP sends the scheduling information. After the STA 2 receives the scheduling information, the STA 2 may send the uplink data to the AP after duration of a short interframe space (short inter-frame space, SIFS). In this case, the AP sends the downlink data to the STA 1. Then the AP and the STA 1 may send the corresponding acknowledgment messages based on the uplink ACK sending time and the downlink ACK sending time in the scheduling information. A schematic diagram of communication between the AP and the STA 1 and the STA 2 may be shown in FIG. 6, where DL ACK represents an acknowledgment message for downlink data, and UL ACK represents an acknowledgment message for uplink data.

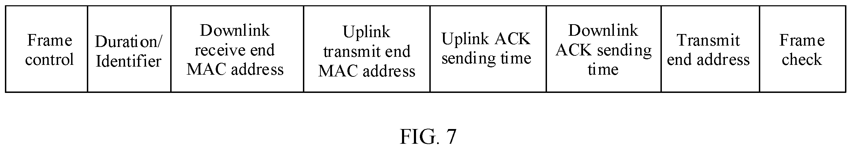

Alternatively, further, when the device is the AP, and the AP communicates with a STA that supports full-duplex communication, the AP may further send a full duplex (full duplex, FD) trigger frame to the STA, where the FD trigger frame may be used to schedule uplink data and downlink data. Specifically, as shown in FIG. 7, the FD trigger frame may include a frame control field, a duration/identifier field, an uplink transmit end MAC address, a downlink receive end MAC address, an uplink ACK sending time, a downlink ACK sending time, a transmit end address, and a frame check field. It should be noted that the FD trigger frame mentioned above may also be modified based on a trigger frame in the 802.11ax protocol, and a field that is mentioned above but is not included in the trigger frame in 802.11ax is added.

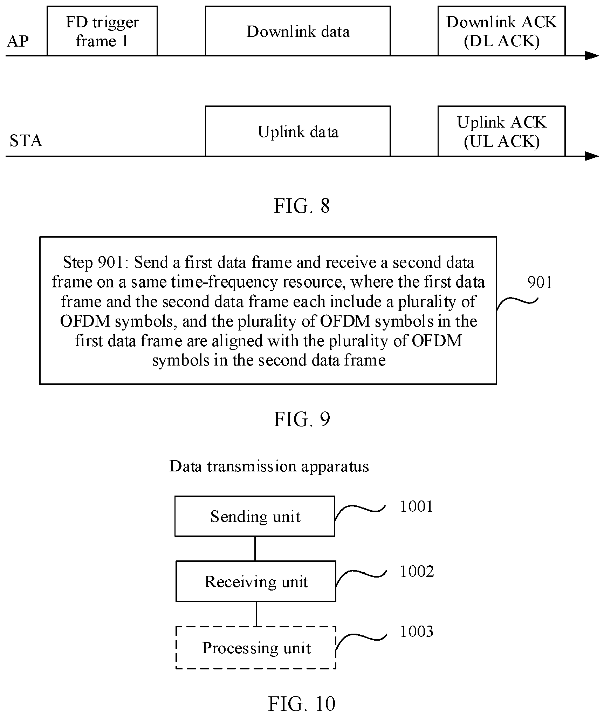

Correspondingly, the AP sends the FD trigger frame. After the STA receives the FD trigger frame, the STA may send uplink data to the AP after duration of an SIFS. In this case, the AP sends downlink data to the STA. Then the AP and the STA may send corresponding acknowledgment messages based on the uplink ACK sending time and the downlink ACK sending time in the FD trigger frame. A schematic diagram of communication between the AP and the STA may be shown in FIG. 8, where DL ACK represents an acknowledgment message for downlink data, and UL ACK represents an acknowledgment message for uplink data.

It should be noted that, when the device that supports full-duplex communication in this embodiment of this application is an AP, the first data frame sent by the AP may be a downlink data frame, and the second data frame received by the AP may be an uplink data frame; when the device that supports full-duplex communication in this embodiment of this application is a STA, the first data frame sent by the STA may be an uplink data frame, and the second data frame received by the STA may be a downlink data frame.

In this embodiment of this application, the device that supports full-duplex communication may send the first data frame and receive the second data frame on the same time-frequency resource, and the pilot sequence used for the OFDM symbols in the first data frame and the pilot sequence used for the OFDM symbols in the second data frame are orthogonal to each other. Because the inner product of the two mutually orthogonal pilot sequences is zero, impact, of a self-interference signal generated by the first data frame, on a received signal corresponding to the second data frame can be reduced, thereby increasing a signal-to-noise ratio of the received signal. In addition, the first data frame is aligned with the second data frame, so that a signal corresponding to the first data frame and a signal corresponding to the second data frame can have a same phase, that is, it is ensured that phases of a self-interference signal and a received signal are the same. This can improve effectiveness of cancellation of the self-interference signal, thereby increasing a signal-to-noise ratio of the received signal.

FIG. 9 is a schematic flowchart of a data transmission method according to an embodiment of this application. The method is applied to a device that supports full-duplex communication, and the method includes the following several steps.

Step 901: The device sends a first data frame and receives a second data frame on a same time-frequency resource. The first data frame and the second data frame each include a plurality of OFDM symbols, and the first data frame is aligned with the second data frame.

The device may be an AP, or may be a STA. Herein, an example in which the device is an AP and the AP communicates with a STA is used for description. When the STA supports full-duplex communication, the first data frame and the second data frame may be data for communication between the AP and one STA. For example, the AP sends the first data frame to a STA 1 and receives the second data frame from the STA 1 on a same time-frequency resource. Correspondingly, for the STA 1, the STA 1 receives the first data frame from the AP and sends the second data frame to the AP on the time-frequency resource. When the STA does not support full-duplex communication, the first data frame and the second data frame may be data for communication between the AP and two STAs. For example, the AP sends the first data frame to a STA 1 and receives the second data frame from a STA 2 on a same time-frequency resource. Correspondingly, for the STA 1, the STA 1 receives the first data frame from the AP on the time-frequency resource; for the STA 2, the STA 2 sends the second data frame to the AP on the time-frequency resource.

In addition, that the first data frame is aligned with the second data frame may mean that a start location and an end location of the first data frame are respectively the same as those of the second data frame. For example, the plurality of OFDM symbols included in the first data frame are in a one-to-one alignment relationship with the plurality of OFDM symbols included in the second data frame, or two or more OFDM symbols in the first data frame are aligned with one OFDM symbol in the second data frame, or one OFDM symbol in the first data frame is aligned with two or more OFDM symbols in the second data frame.

Further, one data frame may include a plurality of segments of OFDM symbols, and each segment of OFDM symbol may include a plurality of OFDM symbols. OFDM symbols in different segments in a same data frame may have different parameters, for example, subcarrier spacings and cyclic prefix lengths, but parameters of OFDM symbols in a same segment are the same. A transmission time of each OFDM symbol may include a partial OFDM symbol time and a cyclic prefix time. The partial OFDM symbol time may be determined by a subcarrier spacing.

Specifically, cyclic prefixes of two OFDM symbols at a same location in the first data frame and the second data frame have a same length, for example, the length of the cyclic prefix may be 0.4 µs, 0.8 µs, 1.6 µs, or 3.2 µs. Two OFDM symbols at a same location in the first data frame and the second data frame have a same subcarrier spacing, for example, the subcarrier spacing is 78.125 kHz, and a partial OFDM symbol length is 3.2 µs, 6.4 µs, or 12.8 µs. Two OFDM symbols at a same location in the first data frame and the second data frame have a same start time, and correspondingly, the two OFDM symbols have a same end time. In this case, a quantity of the plurality of OFDM symbols included in the first data frame is equal to a quantity of the plurality of OFDM symbols included in the second data frame.

For example, a length of each of the first 10 OFDM symbols in the first data frame is 4 µs, and a length of each of subsequent OFDM symbols in the first data frame is 16 µs. Correspondingly, according to the description that two OFDM symbols at a same location are aligned, a length of each of the first 10 OFDM symbols in the second data frame is also 4 µs, and a length of each of subsequent OFDM symbols in the second data frame is also 16 µs.

Further, when the device is the AP, and the AP communicates with two STAs that support half-duplex communication, the AP may further send scheduling information to each STA, where the scheduling information may be used to schedule uplink data and downlink data. The scheduling information is the same as the scheduling information shown in FIG. 5. For details, refer to related descriptions of FIG. 5. Details are not described herein in this embodiment of this application again.

Correspondingly, the AP sends the scheduling information. After the STA 2 receives the scheduling information, the STA 2 may send uplink data to the AP after duration of a short interframe space (short inter-frame space, SIFS). In this case, the AP sends downlink data to the STA 1. Then the AP and the STA 1 may send corresponding acknowledgment messages based on an uplink ACK sending time and a downlink ACK sending time in the scheduling information. A schematic diagram of communication between the AP and the STA 1 and the STA 2 may be shown in FIG. 6, where DL ACK represents an acknowledgment message for downlink data, and UL ACK represents an acknowledgment message for uplink data.

Alternatively, when the device is the AP, and the AP communicates with a STA that supports full-duplex communication, the AP may further send a full duplex (full duplex, FD) trigger frame to the STA, where the FD trigger frame may be used to schedule uplink data and downlink data. The FD trigger frame is the same as the FD trigger frame shown in FIG. 7. For details, refer to related descriptions of FIG. 7. Details are not described herein in this embodiment of this application again.

Correspondingly, the AP sends the FD trigger frame. After the STA receives the FD trigger frame, the STA may send uplink data to the AP after duration of an SIFS. In this case, the AP sends downlink data to the STA. Then the AP and the STA may send corresponding acknowledgment messages based on an uplink ACK sending time and a downlink ACK sending time in the FD trigger frame. A schematic diagram of communication between the AP and the STA may be shown in FIG. 8, where DL ACK represents an acknowledgment message for downlink data, and UL ACK represents an acknowledgment message for uplink data.

It should be noted that, when the device that supports full-duplex communication in this embodiment of this application is an AP, the first data frame sent by the AP may be a downlink data frame, and the second data frame received by the AP may be an uplink data frame; when the device that supports full-duplex communication in this embodiment of this application is a STA, the first data frame sent by the STA may be an uplink data frame, and the second data frame received by the STA may be a downlink data frame.

In this embodiment of this application, the device that supports full-duplex communication may send the first data frame and receive the second data frame on the same time-frequency resource. The plurality of OFDM symbols in the first data frame are aligned with the plurality of OFDM symbols in the second data frame, so that a signal corresponding to the first data frame and a signal corresponding to the second data frame can have a same phase, that is, it is ensured that phases of a self-interference signal and a received signal are the same. This can improve effectiveness of cancellation of the self-interference signal, thereby increasing a signal-to-noise ratio of the received signal.

The foregoing describes the solutions provided in the embodiments of this application mainly from a perspective of interaction between network elements. It may be understood that the network elements, for example, an AP and a STA, each include a corresponding hardware structure and/or software module for performing each function, so as to implement the foregoing functions. A person skilled in the art should easily be aware that, in combination with units and algorithm steps of the examples described in the embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods for each particular application to implement the described functions, but it should not be considered that the implementation goes beyond the scope of this application.

In the embodiments of this application, the AP and the STA may be divided into function modules based on the foregoing method examples. For example, each function module may be obtained through division based on a corresponding function, or two or more functions may be integrated into one module. The integrated module may be implemented in a form of hardware, or may be implemented in a form of a software function module. It should be noted that, in the embodiments of this application, division into modules is an example, and is merely a logical function division. In actual implementation, another division manner may be used. The following provides descriptions by using an example in which each function module is obtained through division based on a corresponding function.

When an integrated unit is used, FIG. 10 is a possible schematic structural diagram of the data transmission apparatus in the foregoing embodiments. The data transmission apparatus includes a sending unit 1001 and a receiving unit 1002. The sending unit 1001 and the receiving unit 1002 are configured to support the data transmission apparatus in performing step 401 in FIG. 4. Further, the data transmission apparatus may further include a processing unit 1003. The processing unit 1003 is configured to support the data transmission apparatus in generating a first data frame, parsing a second data frame, and the like. All related content of the steps in the foregoing method embodiment may be cited in function descriptions of corresponding function modules, and details are not described herein again.

Based on implementation by hardware, the processing unit 1003 in this application may be a processor of the data transmission apparatus, the sending unit 1001 may be a transmitter of the data transmission apparatus, and the receiving unit 1002 may be a receiver of the data transmission apparatus. Usually, the transmitter and the receiver may be integrated to serve as a transceiver. Specifically, the transceiver may also be referred to as a communications interface.

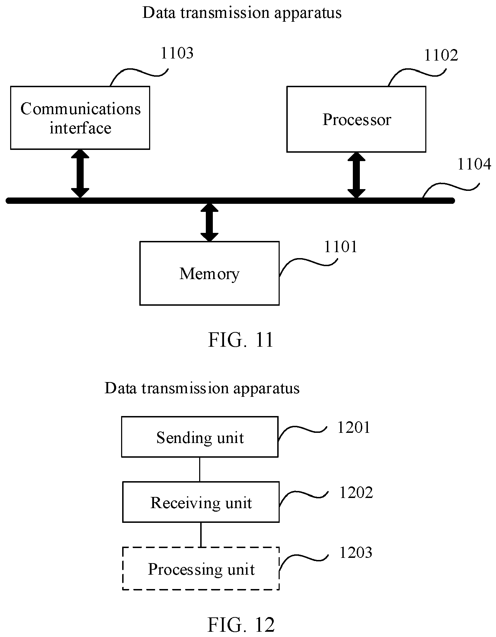

FIG. 11 is a possible schematic logical structural diagram of the data transmission apparatus in the foregoing embodiments according to an embodiment of this application. The data transmission apparatus includes a processor 1102 and a communications interface 1103. The processor 1102 is configured to control and manage an action of the data transmission apparatus. For example, the processor 1102 is configured to support the data transmission apparatus in generating a first data frame and parsing a second data frame, and/or is used for another process of the technology described in this specification. In addition, the data transmission apparatus may further include a memory 1101 and a bus 1104. The processor 1102, the communications interface 1103, and the memory 1101 are connected to each other by using the bus 1104. The communications interface 1103 is configured to support communication of the forwarding device used as an intermediate node. The memory 1101 is configured to store program code and data of the forwarding device used as the intermediate node.

The processor 1102 may be a central processing unit, a general purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination implementing a computing function, for example, a combination including one or more microprocessors, or a combination of a digital signal processor and a microprocessor. The bus 1104 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 11, but this does not mean that there is only one bus or only one type of bus.

When an integrated unit is used, FIG. 12 is a possible schematic structural diagram of the data transmission apparatus in the foregoing embodiments. The data transmission apparatus includes a sending unit 1201 and a receiving unit 1202. The sending unit 1201 and the receiving unit 1202 are configured to support the data transmission apparatus in performing step 901 in FIG. 9. Further, the data transmission apparatus further includes a processing unit 1203, configured to generate a first data frame and parse a second data frame. All related content of the steps in the foregoing method embodiment may be cited in function descriptions of corresponding function modules, and details are not described herein again.

Based on implementation by hardware, the processing unit 1203 in this application may be a processor of the data transmission apparatus, the sending unit 1201 may be a transmitter of the data transmission apparatus, and the receiving unit 1202 may be a receiver of the data transmission apparatus. Usually, the transmitter and the receiver may be integrated to serve as a transceiver. Specifically, the transceiver may also be referred to as a communications interface.

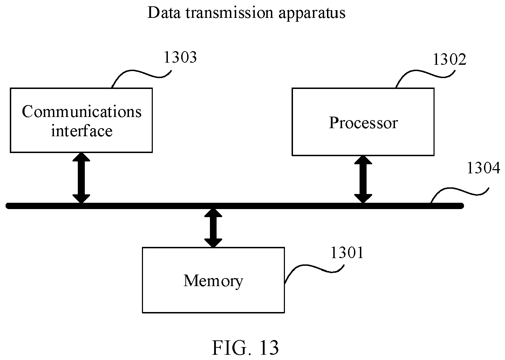

FIG. 13 is a possible schematic logical structural diagram of the data transmission apparatus in the foregoing embodiments according to an embodiment of this application. The data transmission apparatus includes a processor 1302 and a communications interface 1303. The processor 1302 is configured to control and manage an action of the data transmission apparatus. For example, the processor 1302 is configured to generate a first data frame and parse a second data frame, and/or is used for another process of the technology described in this specification. In addition, the data transmission apparatus may further include a memory 1301 and a bus 1304. The processor 1302, the communications interface 1303, and the memory 1301 are connected to each other by using the bus 1304. The communications interface 1303 is configured to support the data transmission apparatus in performing communication. The memory 1301 is configured to store program code and data of the data transmission apparatus.

The processor 1302 may be a central processing unit, a general purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination implementing a computing function, for example, a combination including one or more microprocessors, or a combination of a digital signal processor and a microprocessor. The bus 1304 may be a peripheral component interconnect (PCI) bus, an extended industry standard architecture (EISA) bus, or the like. The bus may be classified into an address bus, a data bus, a control bus, and the like. For ease of representation, only one bold line is used to represent the bus in FIG. 13, but this does not mean that there is only one bus or only one type of bus.

In another embodiment of this application, a readable storage medium is further provided. The readable storage medium stores a computer executable instruction, for a device (which may be a single-chip microcomputer, a chip, or the like) or a processor to perform the steps in the data transmission method provided in FIG. 4. The readable storage medium may include any medium that can store program code, such as a USB flash drive, a removable hard disk, a read-only memory, a random access memory, a magnetic disk, or an optical disc.

In another embodiment of this application, a readable storage medium is further provided. The readable storage medium stores a computer executable instruction, for a device (which may be a single-chip microcomputer, a chip, or the like) or a processor to perform the steps in the data transmission method provided in FIG. 9. The readable storage medium may include any medium that can store program code, such as a USB flash drive, a removable hard disk, a read-only memory, a random access memory, a magnetic disk, or an optical disc.

In another embodiment of this application, a computer program product is further provided. The computer program product includes a computer executable instruction, and the computer executable instruction is stored in a computer readable storage medium. At least one processor of a device may read the computer executable instruction from the computer readable storage medium, and the at least one processor executes the computer executable instruction, so that the device performs the steps in the data transmission method provided in FIG. 4.

In another embodiment of this application, a computer program product is further provided. The computer program product includes a computer executable instruction, and the computer executable instruction is stored in a computer readable storage medium. At least one processor of a device may read the computer executable instruction from the computer readable storage medium, and the at least one processor executes the computer executable instruction, so that the device performs the steps in the data transmission method provided in FIG. 9.

In the embodiments of this application, the device that supports full-duplex communication may send the first data frame and receive the second data frame on the same time-frequency resource, and the pilot sequence used for the OFDM symbols in the first data frame and the pilot sequence used for the OFDM symbols in the second data frame are orthogonal to each other. Because the inner product of the two mutually orthogonal pilot sequences is zero, impact, of a self-interference signal generated by the first data frame, on a received signal corresponding to the second data frame can be reduced, thereby increasing a signal-to-noise ratio of the received signal. Alternatively, the plurality of OFDM symbols in the first data frame are aligned with the plurality of OFDM symbols in the second data frame, so that a signal corresponding to the first data frame and a signal corresponding to the second data frame can have a same phase, that is, it is ensured that phases of a self-interference signal and a received signal are the same. This can improve effectiveness of cancellation of the self-interference signal, thereby increasing a signal-to-noise ratio of the received signal.

Finally, it should be noted that the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A data transmission method, wherein the method is applied to a device that supports full-duplex communication, and the method comprises:
sending a first data frame and receiving a second data frame on a same time-frequency resource, wherein
the first data frame and the second data frame each comprise a plurality of OFDM symbols, and a pilot sequence used for the OFDM symbols in the first data frame and a pilot sequence used for the OFDM symbols in the second data frame are orthogonal to each other.

2. The method according to claim 1, wherein a length of the pilot sequence is 2, the mutually orthogonal pilot sequences comprise a first pilot sequence and a second pilot sequence, the first pilot sequence is [1 1], and the second pilot sequence is either of the following: [1 -1] and [-1 1].

3. The method according to claim 1, wherein a length of the pilot sequence is 4, the mutually orthogonal pilot sequences comprise a first pilot sequence and a second pilot sequence, the first pilot sequence is [1 1 1 -1], and the second pilot sequence is any one of the following: [1 1 -1 1], [1 -1 1 1], [1 -1 -1 -1], [-1 1 1 1], [-1 1 -1 -1], and [-1 -1 1 -1].

4. The method according to claim 1, wherein a length of the pilot sequence is 6, the mutually orthogonal pilot sequences comprise a first pilot sequence and a second pilot sequence, the first pilot sequence is [1 1 1 -1 -1 1], and the second pilot sequence is any one of those shown in Table 1 in the specification.

5. The method according to claim 1, wherein a length of the pilot sequence is 8, the mutually orthogonal pilot sequences comprise a first pilot sequence and a second pilot sequence, the first pilot sequence is [1 1 1 -1 -1 1 1 1], and the second pilot sequence is any one of those shown in Table 2 in the specification.

6. The method according to claim 1, wherein a length of the pilot sequence is 16, the mutually orthogonal pilot sequences comprise a first pilot sequence and a second pilot sequence, the first pilot sequence is [1 1 1 -1 -1 1 1 1 1 1 1 -1 -1 1 1 1], and the second pilot sequence is any one of those shown in Table 3 in the specification.

7. The method according to claim 1, wherein a length of the pilot sequence is 24, the mutually orthogonal pilot sequences comprise a first pilot sequence and a second pilot sequence, the first pilot sequence is [1 1 1 -1 -1 1 1 1 1 1 1 -1 -1 1 1 1 1 1 1 -1 - 1 1 1 1], and the second pilot sequence is any one of those shown in Table 4 in the specification.

8. The method according to claim 1, wherein a length of the pilot sequence is 32, the mutually orthogonal pilot sequences comprise a first pilot sequence and a second pilot sequence, the first pilot sequence is [1 1 1 -1 -1 1 1 1 1 1 1 -1 -1 1 1 1 1 1 1 -1 - 1 1 1 1 1 1 1 -1 -1 1 1 1], and the second pilot sequence is any one of those shown in Table 5 in the specification.

9. The method according to any one of claims 1 to 8, wherein the first data frame is aligned with the second data frame.

10. The method according to claim 9, wherein cyclic prefixes of two OFDM symbols at a same location in the first data frame and the second data frame have a same length.

11. The method according to claim 9 or 10, wherein two OFDM symbols at a same location in the first data frame and the second data frame have a same subcarrier spacing.

12. The method according to any one of claims 9 to 11, wherein two OFDM symbols at a same location in the first data frame and the second data frame have a same start time.

13. A data transmission method, wherein the method is applied to a device that supports full-duplex communication, and the method comprises:
sending a first data frame and receiving a second data frame on a same time-frequency resource, wherein
the first data frame and the second data frame each comprise a plurality of OFDM symbols, and the first data frame is aligned with the second data frame.

14. The method according to claim 13, wherein cyclic prefixes of two OFDM symbols at a same location in the first data frame and the second data frame have a same length.

15. The method according to claim 13 or 14, wherein two OFDM symbols at a same location in the first data frame and the second data frame have a same subcarrier spacing.

16. The method according to any one of claims 13 to 15, wherein two OFDM symbols at a same location in the first data frame and the second data frame have a same start time.

17. A data transmission apparatus, wherein the apparatus supports full-duplex communication, and the apparatus comprises:
a sending unit, configured to send a first data frame on a time-frequency resource; and
a receiving unit, configured to receive a second data frame on the time-frequency resource, wherein
the first data frame and the second data frame each comprise a plurality of OFDM symbols, and a pilot sequence used for the OFDM symbols in the first data frame and a pilot sequence used for the OFDM symbols in the second data frame are orthogonal to each other.

18. The apparatus according to claim 17, wherein a length of the pilot sequence is 2, the mutually orthogonal pilot sequences comprise a first pilot sequence and a second pilot sequence, the first pilot sequence is [1 1], and the second pilot sequence is either of the following: [1 -1] and [-1 1].

19. The apparatus according to claim 17, wherein a length of the pilot sequence is 4, the mutually orthogonal pilot sequences comprise a first pilot sequence and a second pilot sequence, the first pilot sequence is [1 1 1 -1], and the second pilot sequence is any one of the following: [1 1 -1 1], [1 -1 1 1], [1 -1 -1 -1], [-1 1 1 1], [-1 1 -1 -1], and [-1 -1 1 -1].

20. The apparatus according to claim 17, wherein a length of the pilot sequence is 6, the mutually orthogonal pilot sequences comprise a first pilot sequence and a second pilot sequence, the first pilot sequence is [1 1 1 -1 -1 1], and the second pilot sequence is any one of those shown in Table 1 in the specification.

21. The apparatus according to claim 17, wherein a length of the pilot sequence is 8, the mutually orthogonal pilot sequences comprise a first pilot sequence and a second pilot sequence, the first pilot sequence is [1 1 1 -1 -1 1 1 1], and the second pilot sequence is any one of those shown in Table 2 in the specification.

22. The apparatus according to claim 17, wherein a length of the pilot sequence is 16, the mutually orthogonal pilot sequences comprise a first pilot sequence and a second pilot sequence, the first pilot sequence is [1 1 1 -1 -1 1 1 1 1 1 1 -1 -1 1 1 1], and the second pilot sequence is any one of those shown in Table 3 in the specification.

23. The apparatus according to claim 17, wherein a length of the pilot sequence is 24, the mutually orthogonal pilot sequences comprise a first pilot sequence and a second pilot sequence, the first pilot sequence is [1 1 1 -1 -1 1 1 1 1 1 1 -1 -1 1 1 1 1 1 1 -1 - 1 1 1 1], and the second pilot sequence is any one of those shown in Table 4 in the specification.

24. The apparatus according to claim 17, wherein a length of the pilot sequence is 32, the mutually orthogonal pilot sequences comprise a first pilot sequence and a second pilot sequence, the first pilot sequence is [1 1 1 -1 -1 1 1 1 1 1 1 -1 -1 1 1 1 1 1 1 -1 - 1 1 1 1 1 1 1 -1 -1 1 1 1], and the second pilot sequence is any one of those shown in Table 5 in the specification.

25. The apparatus according to any one of claims 17 to 24, wherein the first data frame is aligned with the second data frame.

26. The apparatus according to claim 25, wherein cyclic prefixes of two OFDM symbols at a same location in the first data frame and the second data frame have a same length.

27. The apparatus according to claim 25 or 26, wherein two OFDM symbols at a same location in the first data frame and the second data frame have a same subcarrier spacing.

28. The apparatus according to any one of claims 25 to 27, wherein two OFDM symbols at a same location in the first data frame and the second data frame have a same start time.

29. A data transmission apparatus, wherein the apparatus supports full-duplex communication, and the apparatus comprises:
a sending unit, configured to send a first data frame on a time-frequency resource; and
a receiving unit, configured to receive a second data frame on the time-frequency resource, wherein
the first data frame and the second data frame each comprise a plurality of OFDM symbols, and the first data frame is aligned with the second data frame.

30. The apparatus according to claim 29, wherein cyclic prefixes of two OFDM symbols at a same location in the first data frame and the second data frame have a same length.

31. The apparatus according to claim 29 or 30, wherein two OFDM symbols at a same location in the first data frame and the second data frame have a same subcarrier spacing.

32. The apparatus according to any one of claims 29 to 31, wherein two OFDM symbols at a same location in the first data frame and the second data frame have a same start time.

33. A data transmission apparatus, wherein the apparatus comprises a processor and a memory, the memory is configured to store an instruction, and the processor is configured to execute the instruction in the memory to perform the method according to any one of claims 1 to 16.

34. A computer readable storage medium, wherein the computer readable storage medium is configured to store a computer program, and when the computer program is run on a computer, the computer is enabled to perform the method according to any one of claims 1 to 16.

35. A computer program product, wherein the computer program product comprises an instruction used to perform the method according to any one of claims 1 to 16.

36. A data transmission apparatus, configured to implement the method according to any one of claims 1 to 16.
